# EUROPEAN PATENT APPLICATION

(11) **EP 4 524 062 A1**
(43) Date of publication of application: **19.03.2025**
(21) Application number: 24151347.2
(22) Date of filing: 11.01.2024
(51) Int. Cl.: B65G 1/04, B65G 1/06, B65G 1/08, B65G 65/00

(54) **A HANDLING STATION OF AN AUTOMATED SHUTTLE STORAGE SYSTEM**

(30) Priority: 18.09.2023 EP 23197969
(71) Applicant: MOVU, 9160 Lokeren (BE)
(72) Inventor: Van Cauwenbergh, Jan, 1840 Londerzeel (BE); Goossens, Thomas, 3000 Leuven (BE)
(74) Representative: IP HILLS NV

(57) **Abstract**

A handling station (100) of an automated shuttle storage system is provided. The handling station comprises:
- a receiving zone (110) for receiving goods from said automated shuttle storage system, and having a goods moving sense;
- a transfer zone (150) positioned upstream said receiving zone in view of said goods moving sense, the transfer zone being adjacent to said receiving zone along a boundary (180), said transfer zone comprising a void shuttle parking space (151) adapted to take in a shuttle (200) from an automated shuttle storage system.

The transfer zone comprise two good transfer tracks (160, 170) being non parallel to the boundary (180), each of said good transfer tracks (160, 170) being positioned along a longitudinal side of the void shuttle parking space (151) and having a back end and an opposite front end adjacent the boundary, said good transfer tracks being adapted to receive the goods from a shuttle positioned in said void shuttle parking space and being adapted to transfer the goods towards the receiving zone by having the back ends of the good transfer tracks being positioned at a higher position in view to the horizontal (300), as compared to the front ends of the good transfer tracks.

## Description

### Field of the Invention

The present invention generally relates to handling stations, such as outbound stations of an automated shuttle storage system, automated shuttle storage systems itself, and methods for unloading goods from an automated shuttle storage system.

### Background of the Invention

Automated shuttle storage systems are known in the art, and used to temporarily store goods, like pallets, cradles, and alike, on a plurality of storage cells or storage locations of usually a racking system. These cells are usually located at different heights in the storage system. The storage system, like a racking system, has one, and usually more than one horizontal deck. On each deck, a path is created to allow a shuttle to travel through the storage system between the storage cells. This path is usually provided by horizontal tracks, defining to rail, each having a surface to support the shuttle moving on it by means of a plurality of wheels, usually sets of two or four wheels at each longitudinal side of the shuttle. In order to have the shuttle moving in 2D, the shuttle may have also wheels at the front- and backside of the shuttle. The path through the storage system, like a racking system, comprises crossings where the shuttle may change direction from the main horizontal track or tracks (also referred to as "mains") into branches (also referred to as "channels") and alike, and back. In order to move in the vertical direction, the racking system may either comprise a lifting system to lift shuttles, optionally being loaded with goods, or the shuttles may have a propelling system to allow the shuttle itself to propel in vertical direction making use of vertical tracks. An example of such an automated shuttle storage system, being an automated shuttle racking system, is shown in WO2022089812A1.

In some automated shuttle storage systems, the shuttle may be adapted to bring its payload to a picking position somewhat remote from the racking system, where operator or robots take out the required objects from the shuttle. Thereafter the shuttle brings the partially emptied payload back to a storage cell in the racking system. In other types of warehouses, goods are stored, brought in and taken out on pallets as a whole. In these warehouses, the shuttle bringing the payload, being a pallet, to a picking position somewhat remote from the racking system, cause operating time from these shuttles. Providing outbound stations at the racking system itself requires less shuttle moving time and hence is more cost efficient.

There is however a need to provide easily functioning outbound stations for this kind of automated shuttle storage system. Such outbound stations are to allow goods, e.g. pallets carrying goods or totes, to be taken out of the storage system in their entirety. Some goods, e.g. pallets carrying goods, are not intended to be taken back into the storage system. Alternatively, more than one unit of goods may be stored in a container or box or alike, or may be stacked on a support, like a pallet. Such groups of goods are made available at the outbound station to allow picking of the units of goods from the pallet or out of the container, like boxes. The pallets and/or boxes, once empty, are removed from the outbound station. While the goods are awaiting to be taken from the outbound station, or while units of goods are picked from the pallets and/or boxes in the outbound station, it is desirable that further goods, like goods on a pallet, may already be awaiting to be taken from or to be emptied by picking, at the same outbound station. As such no downtime is caused when the pallet is picked empty since a new pallet is already available.

Other goods, loke goods stored in totes, are to be taken out temporarily at e.g. workstations or alike. While the totes are awaiting to be handled or handled at the workstation, e.g. while units of goods are picked from the tote, it is desirable that further may already be awaiting to be provide to the workstation. As such no downtime is caused when goods are picked from a tote is picked since a new tote is already available.

### Summary of the Invention

According to the first aspect of the invention, a handling station, possibly an outbound station, of an automated shuttle storage system, which automated shuttle storage system comprising a racking system and one or more shuttles moving in said racking system is provided. The handling station comprises
- a receiving zone for receiving goods from said automated shuttle storage system, and having a goods moving sense;
- a transfer zone positioned upstream said receiving zone in view of said goods moving sense, the transfer zone being adjacent to said receiving zone along a boundary, said transfer zone comprising a void shuttle parking space adapted to take in a shuttle from an automated shuttle storage system;
wherein said transfer zone comprise two good transfer tracks being non parallel to the boundary, each of said good transfer tracks being positioned along a longitudinal side of the void shuttle parking space and having a back end and an opposite front end adjacent the boundary, said good transfer tracks being adapted to receive the goods from a shuttle positioned in said void shuttle parking space and being adapted to transfer the goods towards the receiving zone by having the back ends of the good transfer tracks being positioned at a higher position in view to the horizontal, as compared to the front ends of the good transfer tracks.

According to some embodiments of this first aspect of the invention, the handling station is an outbound station.

According to a first important facet of this first aspect of the invention, the receiving zone may be a gravity roller zone comprising a gravity roller conveyor for receiving goods from said automated shuttle storage system, said two good transfer tracks are two gravity roller tracks .

Hence according to this first important facet of the first aspect of the invention, an outbound station of an automated shuttle storage system is provided. The automated shuttle storage system comprising a racking system and one or more shuttles moving in said racking system. The outbound station comprises:
- A gravity roller zone comprising a gravity roller conveyor for receiving goods from said automated shuttle storage system, and having a goods moving sense;
- A transfer zone positioned upstream said gravity roller zone in view of said goods moving sense, the transfer zone being adjacent to said gravity roller zone along a boundary, said transfer zone comprising a void shuttle parking space adapted to take in a shuttle from an automated shuttle storage system.

The transfer zone comprise two gravity roller tracks being non parallel to the boundary, each of said gravity roller tracks being positioned along a longitudinal side of the void shuttle parking space and having a back end and an opposite front end adjacent the boundary, said gravity roller tracks being adapted to receive the goods from a shuttle positioned in said void shuttle parking space and being adapted to transfer the goods towards the gravity roller zone by having the back ends of the gravity roller tracks being positioned at a higher position in view to the horizontal, as compared to the front ends of the gravity roller tracks.

The outbound station according to the invention is preferably a non-driven outbound station of an automated shuttle storage system, i.e. an outbound station where no element is driven in order to bring the goods to the front end of the outbound station.

When reference is made to a slope or a line or device or element is sloped, this means that, unless otherwise explicitly mentioned, the line or device or element is under an angle about the horizonal. Depending on the direction and sense one is considering the slope, this slope refers to an inclination or a declination.

The two gravity roller tracks are nonparallel to the boundary. The two gravity roller tracks themselves are preferably mutually parallel and substantially perpendicularly oriented to the boundary. This means that back end, being opposite to the front end, and the front end define a line parallel to the goods moving sense of the gravity roller zone.

Each of the gravity roller tracks are positioned along a side of the void shuttle parking space, i.e. one of them is positioned along one side of the void shuttle parking space, the other is positioned along the other side of the void shuttle parking space. Their top surfaces, i.e. the top points of the elements forming the rolling action, are preferably all coplanar.

The gravity roller tracks may define a gravity roller track top plane, the gravity roller tracks being adapted to receive the goods from the shuttle positioned in said void shuttle parking space and being adapted to transfer the goods towards the gravity roller zone while said gravity roller track top plane is under a slope with respect to the horizontal about a line parallel to the boundary, the back ends of the gravity roller tracks being positioned at a higher position as compared to the front ends of the gravity roller tracks.

Shuttles which move in the automated shuttle storage system may be received in the transfer zone, which zone may also be referred to as parking place. The transfer zone is free of any object such the shuttle, carrying its payload or goods, is not hindered when moving in the open space between the two gravity roller tracks. This is because the two gravity roller tracks are present along the longitudinal sides of the transfer zone. Shuttles typically have a load carrying top surface which can be adjusted in height in view of the rolling and driving elements of the shuttle, and on which the payload, like a pallet or cradle or alike, is carried. This payload is broader than the load carrying top surface and extends beyond the edge of the load carrying top surface. The shuttle when moving into the transfer zone, may position the payload such the extending parts at the longitudinal side of the shuttle, becomes positioned above the gravity roller tracks. When lowering the load carrying top surface's, the payload contacts the top surfaces of the gravity roller tracks. As the back ends of the gravity roller tracks are positioned at a higher position in view to the horizontal, as compared to the front ends of the gravity roller tracks, or by moving one or more of the back end and front end of the gravity roller tracks such the back ends of the gravity roller tracks become positioned at a higher position in view to the horizontal, as compared to the front ends of the gravity roller tracks, the payload, once is free of contact with the load carrying top surface of the shuttle, will roll towards the front end of the gravity roller tracks, and as such towards the gravity roller zone.

Alternatively or additionally, the height of the gravity roller tracks may be changed in view of the load carrying top surface. By lifting the gravity roller tracks, the payload may be lifted from the load carrying top surface. When the line between back end and front end of the gravity roller tracks is under a slope to the horizontal, the payload, now resting on the gravity roller tracks, may move towards the gravity roller zone.

According to some embodiments, for both gravity roller tracks, the maximum angle between the imaginary line connecting the back end and the front end of the gravity roller track and the horizontal, may be more than or equal to 2%. Preferably this maximum angle may be more than or equal to 2.5%, even more than 3%. In the context of this invention, angles may be expressed in either degrees (from 0° to 360°) or in percentages (%). The percentage is the ratio of the short side over the long side of a right-angled triangle, expressed as percentage, where the angle is the angle having the long side (with length LI) being the adjacent rectangle side and the short side (with length Ls) the opposite rectangle side. the percentage hence is Ls*100/LI; the angel expressed in degrees is tan(Ls/LI).

This maximum angle is preferably less than or equal to 6%, preferably less than or equal to 5.5%, e.g. less than or equal to 5%.

The gravity roller zone defines a plane which is under a slope with respect to the horizontal about a line parallel to the boundary, the boundary being at a higher vertical position as compared to the front end of the gravity roller zone.

The slope between this plane and the horizontal is preferably more than or equal to 2%, most preferably equal or more than 2.5%, and may be substantially identical to the maximum angle between the imaginary line connecting the back end and the front end of the gravity roller track and the horizontal. This maximum slope of the gravity roller zone is preferably less than or equal to 6%, preferably less than or equal to 5.5%, e.g. less than or equal to 5%.

According to some embodiments, said gravity roller zone may define a plane which is under a slope with respect to the horizontal about a line parallel to the boundary, the slope between this plane and the horizontal is substantially identical to the angle between the imaginary line connecting the back end and the front end of the gravity roller track and the horizontal.

It is clear that, in case the angle between the imaginary line connecting the back end and the front end of the gravity roller track can be adjusted or changed, the slope between this plane of the gravity roller zone and the horizontal may be substantially identical to the maximum angle between the imaginary line connecting the back end and the front end of the gravity roller track and the horizontal.

According to some embodiments, the slope between horizontal and the imaginary line between the back end and the front end of the gravity roller track about a line parallel to the boundary may be variable from about 0° to a maximum angle. Hence for each gravity roller track, the difference in height between the back end and the front end of the gravity roller tracks may be alterable.

This angle may be varied by moving the back end and/or the front end of the gravity roller track by one or more actuators, e.g. pneumatic, hydraulic or electrically driven actuators, by springs or by any other means. The back end of the gravity roller track may be raised and lowered, e.g. by one or more actuators, e.g. pneumatic, hydraulic or electrically driven actuators, while the front end remains at its position. The front end of the gravity roller track may be lowered and raised, e.g. by one or more actuators, e.g. pneumatic, hydraulic or electrically driven actuators, while the back end remains at its position.

Additionally the back end and the front end of the gravity roller track may be raised or lowered simultaneously by the actuators, prior or after lifting or lowering one of the back end and the front end of the gravity roller track.

According to some embodiments, for each gravity roller track, the difference in height between the back end and the front end of the gravity roller tracks may be unalterable.

Shuttles which move in the automated shuttle storage system may be received in the transfer zone. The shuttle typically may adjust the height of the load carrying top in view of the rolling and driving elements of the shuttle. As the payload is broader than the load carrying top surface and extends beyond the edge of the load carrying top surface, the shuttle may position the payload such the extending parts at the longitudinal side of the shuttle, becomes positioned above the gravity roller tracks. When lowering the load carrying top surface's height, the payload contacts the top surfaces of the gravity roller tracks. As the back ends of the gravity roller tracks are positioned at a higher position in view to the horizontal, the payload, once is free of contact with the load carrying top surface of the shuttle, will roll towards the front end of the gravity roller tracks, and as such towards the gravity roller zone.

Hence according to these embodiments, the difference in height of the back ends and the front ends of the gravity roller tracks is unalterable. According to these embodiments, the heights of the back ends and the front ends of the gravity roller tracks, hence the heights of the gravity roller tracks, are unalterable.

Additionally or alternatively according to some embodiments, the back end and the front end of the gravity roller track may be raised or lowered simultaneously by the actuators, such the payload, extending over the gravity roller tracks, is lifted from the load carrying top surface, is moved towards the gravity roller zone.

Still according to other embodiments, the transfer zone may comprise a shuttle receiving support adapted to carry a shuttle, this shuttle receiving support may be adapted to move in a direction perpendicular to horizontal.

According to some embodiments, the shuttle receiving support may be substantially horizontally oriented.

According to other embodiments, the shuttle receiving support may be under a slope to the horizontal, e.g. unalterably sloped, or the position to the horizontal may be altered between horizontal and a sloped position.

The slope between this shuttle receiving support and the horizontal is preferably more than or equal to 2%, such as more than or equal to 4%, and may be substantially identical to the maximum angle between the imaginary line connecting the back end and the front end of the gravity roller tracks and the horizontal. This slope is preferably less than or equal to 6%, preferably less than or equal to 5.5%, e.g. less than or equal to 5%.

This orientation of this shuttle receiving support may be varied by moving the back end and/or the front end of the shuttle receiving support by one or more actuators, e.g. pneumatic, hydraulic or electrically driven actuators, by springs or by any other means. The back end of the shuttle receiving support is the end oriented away from the gravity roller zone, the front end is the end oriented towards the gravity roller zone.

This shuttle receiving support is preferably a planar support or may define a plane, herein after referred to as the support plane.

According to some embodiments, the transfer zone may comprise a shuttle receiving support adapted to carry a shuttle, this shuttle receiving support being unalterably sloped with respect to the horizontal about a line parallel to the boundary.

According to other embodiments, the transfer zone may comprise a shuttle receiving support adapted to carry a shuttle, this shuttle receiving support being moveable between a horizontal position horizontal and a sloped position in view of the horizontal, sloped about a line parallel to the boundary.

According to some embodiments, the shuttle receiving support may be defined by two rails, each of said rails having a support surface and each of said rails being positioned along one longitudinal side of the transfer zone and adapted to support the wheels present at a longitudinal side of a shuttle.

As an example these rails are L-profiles, the root of the L-profile is oriented inwards the transfer zone and upwards. One of the flanges of the L-profile, the first flange, is parallel to the longitudinal side of the transfer zone, and preferably substantially vertically oriented. The other of the two flanges of the L-profile, the second flange, is parallel to the longitudinal side of the transfer zone, and preferably substantially horizontally oriented. This second flange is adapted to receive the shuttle and is the support surface for the shuttle, while the first flange is intended to direct the shuttle when moving into the transfer zone, and preventing to some extent the shuttle to deviate towards the longitudinal sides of the transfer zone.

Alternatively the root of the L profile may be oriented outwards the transfer zone and downwards, again providing a flange, being parallel to the longitudinal side of the transfer zone, and preferably substantially horizontally oriented. Again, this flange is adapted to receive the shuttle and is the support surface for the shuttle.

According to some embodiments, the support surface may have a longitudinal profile, at the back side of the support surface, said support surface has a horizontally oriented section.

The back side of the support surface, hence of the rail, is the side which is intended to be oriented towards the racking system. The front side of the support surface , hence of the rail, is the side which is intended to be oriented towards the gravity roller zone.

Adjacent to this horizontally oriented section and the front end of the support surface, the profile may be flat but sloped downwards seen in the direction and sense from back to front.

This slope preferably is equal or more than 2%, most preferred equal or more than 4%. This slope is preferably less than or equal to 6%, preferably less than or equal to 5.5%, e.g. less than or equal to 5%.

According to some embodiments, the support surface has a longitudinal profile, at the front side of the support surface, said support surface has a horizontally oriented section.

Between the two horizontally oriented sections, the profile may be flat but sloped downwards, seen in the direction and sense from back to front. This slope preferably is equal or more than 2%, most preferred equal or more than 4%. This slope is preferably less than or equal to 6%, preferably less than or equal to 5.5%, e.g. less than or equal to 5%.

The profile with one or two substantially horizontally oriented sections, may be dimensioned such that, when a shuttle has moved into the transfer zone and came to standstill, each of the substantially horizontally oriented sections of the profile may support at least one of the wheels of the shuttle. This has the advantage that the standstill of the shuttle, even in slightly sloped orientation towards the gravity roller zone, is rather stable and reliable.

According to some embodiments, the shuttle receiving support may define a support plane being unalterably sloped with respect to the horizontal about a line parallel to the boundary according to an angle A1, the unalterable angle between the imaginary line connecting the back end and the front end of the gravity roller track and the horizontal defines an angle A2, wherein A1 is substantially equal to A2.

In these embodiments, moving elements, like actuators and alike, may be avoided to a large extent. The shuttle may place its payload on the gravity roller track by lowering its support surface, while in the outbound system, no element needs to be moved or heights needs to be changed. This cause the functioning of the outbound system to be more reliable, easily controllable and may reduce the need for accidental or planned maintenance, hence increasing uptime of the outbound system.

According to some embodiments, the gravity roller zone may comprise or may be a gravity roller conveyor. A gravity roller conveyor comprises a series of rollers with substantially parallel and coplanar rotation axes.

Alternatively the gravity roller zone is or may comprise a gravity ball conveyor or a ball table.

A gravity ball conveyor or ball table comprises a series of balls, each held in spherical space in a planar volume in which the balls extend beyond the surface of the planar volume over a height less than the radius of the ball, and in which spherical space the ball may freely rotate in all directions. The tops of the balls extend beyond the surface of the planar volume define a plane on which the load may move.

Similarly, according to some embodiments, the gravity roller tracks may be conveyor roller tracks. Alternatively the gravity roller tracks are or may comprise a conveyor ball tracks, conveyor ball tables, ball transfer conveyor, ball transfer table, or alike.

It is clear that the elements of these outbound stations may be provided from material accepted in the technical field the outbound station is working in. gravity roller tracks, gravity roller conveyors, support surfaces, and alike, may be provided from metal, steel, stainless steel, polymeric material like composite materials, food grade materials and alike, as is known in the art.

Optionally at the front end of the transfer zone, near or along the boundary of the gravity roller zone, a blocking means may be provided to prevent shuttles crashing or hitting against the gravity roller zone, when entering the transfer zone. Vertically oriented plates or impact resistant blocks or alike may be provided preventing an impact of the shuttle to the gravity conveyor zone in case of malfunctioning of the shuttle. Additionally or alternatively, these blocking means may prevent to move the shuttle, usually accidentally, forward beyond the end of the support surface. The shuttle is prevented from falling from the support surface.

The outbound stations according to the invention are preferably non driven outbound stations. No active components are necessary to bring the goods to the front end of the outbound station when a shuttle has provided goods to the outbound station.

According to some embodiments, a good blocking means, like a pin or plate, may be provided at or near the boundary, which good blocking means may be switched between a blocking position and a non-blocking position. In blocking position, the goods being provided to the gravity conveyer tracks, may roll down up to the good blocking means. The good blocking means prevents the good to move further in the gravity roller zone. When the good blocking means is switched to its non-blocking position, the good may continue its path under gravity into and along the gravity roller zone.

Hence the goods, preferably loaded pallets, may be provided to the outbound station. The goods at the front end of the gravity roller zone may be taken from the gravity roller zone manually or automatically, e.g. including the pallet on which the goods were stored and transported. Possibly, while unloading the goods present on the gravity roller zone, a second or further pallet or unit of goods may be provided to the transfer zone by a shuttle where the goods are unloaded from the shuttle and await the further transfer to the gravity roller zone.

According to a second important facet of this first aspect of the invention, the good transfer tracks may be series of linearly aligned rotatable rollers, the axis of said rollers being substantially parallel to the axis of rotation, the axis of the rollers are directed inwards the void shuttle parking space.

The series of linearly aligned rotatable rollers means that the line of the good transfer track and the axes of the rotatable rollers are substantially coplanar, the line of the good transfer track and each of the axes of the rotatable rollers being mutually non-parallel, are preferably angled one to the other forming an angle on 45° to 90°, most preferably forming an angle of 90° hence being perpendicular one to the other. It is preferred that all rollers, are identical. The rollers may be provided from steel, optionally being coated with an anti-corrosion coating, like a Niblox coating. Alternatively the rollers may be provided from stainless steel. The rollers at the contact surface to contact the tote, may be provided with an anti-slip coating, in particularly when the rollers are driven rollers.

Most preferably the series of linearly aligned rotatable cylindrical rollers are series of linearly aligned rotatable cylindrical rollers.

In general, the rollers may comprise an axle or shaft, possibly a non-rotating, hence fixed axle, which has near or at one outer end a rotatable object, like a wheel or bearing. This rotatable object is adapted to rotate round said axle. The non-rotating, hence fixed axle may be mounted at its other outer end to the lateral side of the void parking space, e.g. to a flange or plate defining this lateral side. Alternatively the cylindrical roller may comprise a rotatable axle, mounted at its other outer end to the lateral side of the void parking space by means of a bearing.

The maximum diameter of the linearly aligned rotatable cylindrical rollers is preferably in the range of 4mm to 30 mm, more preferred in the range of 10mm to 25 mm, e.g. in the range of 13 mm to 22mm, e.g. 13mm, 14mm, 15mm, 16mm, 17mm, 18mm, 20mm or 21mm.

The linearly aligned rotatable rollers may be conical. The maximum diameter of the linearly aligned rotatable conical rollers is preferably in the range of 4mm to 30 mm, more preferred in the range of 4mm to 22 mm, while the minimum diameter of the linearly aligned rotatable conical rollers is preferably in the range of 4mm to 30 mm , more preferred in the range of 22mm to 30mm.

The axial length of the linearly aligned rotatable rollers is preferably in the range of 10 mm to 90 mm, more preferred in the range of 20 mm to 75 mm, e.g. 26 mm to 55 mm, e.g. 26mm, 27mm, 28mm 29 mm or 30mm, or 50m, 51mm, 52mm, 53mm, 54mm or 55mm..

The plurality of linearly aligned rotatable rollers in each series of linearly aligned rotatable cones or cylinders are on an inter-axis distance in the range of 10mm to 150 mm, such as in the range of 25mm to 125 mm, e.g. 50mm or 100mm.

The number of linearly aligned rotatable rolmlers in each series of linearly aligned rotatable rollers may be chosen in the range of 3 to 10, such as in the range of 4 to 8, e.g. 3, 4, 5, 6, 7, 8, 9 or 10.

The linearly aligned rotatable rollers have their axes, as well as their axes of rotation, directed inwards the void shuttle parking space. A tote carried on a carrying platform of a shuttle, may be spaced apart from the carrying platform along the side of the tote parallel to the line of the good transfer track, optionally along its entire perimeter. When a shuttle with a tote being carried, enters the void shuttle parking space, the linearly aligned rotatable rollers may fit into the space between the side of the tote and the carrying platform. When the shuttle is parked and lowers its carrying platform, or when the shuttle is parked and the linearly aligned rotatable rollers are raised, or more in general, when the distance between the carrying platform of the shuttle and the linearly aligned rotatable rollers is increased, the tote may become supported on linearly aligned rotatable rollers, and is no longer carried on the carrying platform. The shuttle may move out of the shuttle parking space, leaving the tote carried on the linearly aligned rotatable rollers. Possibly, the shuttle may carry more than one tote, each tote being positioned such the linearly aligned rotatable rollers may fit into the space between the side of the totes and the carrying platform. As such more than one tote may be handled simultaneously.

In a similar way, when a good is carried on the carrying platform of a shuttle while extending beyond the perimeter of the shuttle along the shuttles side parallel to the line of the good transfer track, the linearly aligned rotatable rollers may be located under the outwards extending lower side of the good when the shuttle moves into the void shuttle parking space. When the shuttle is parked and lowers its carrying platform, or when the shuttle is parked and the linearly aligned rotatable rollers are raised, the good may become supported on linearly aligned rotatable rollers, and is no longer carried on the carrying platform. The shuttle may move out of the shuttle parking space, leaving the good carried on the linearly aligned rotatable rollers.

According to some embodiments, for both series of linearly aligned rotatable rollers, the maximum angle between the imaginary line connecting two outer rollers and the horizontal, may be more than or equal to 2%.

According to some embodiments, each of said series of linearly aligned rotatable rollers may define a plane which is under a slope with respect to the horizontal about a line parallel to the boundary, the slope between the imaginary line connecting two outer rollers and the horizontal.

According to some embodiments, for each series of linearly aligned rotatable rollers, the difference in height between the two outer rollers maybe unalterable.

According to some embodiments, the transfer zone may comprise a shuttle receiving support (154) adapted to carry a shuttle, this shuttle receiving support being unalterably sloped with respect to the horizontal about a line parallel to the boundary

According to some embodiments, the shuttle receiving support may define a support plane being unalterably sloped with respect to the horizontal about a line parallel to the boundary according to an angle A1, the unalterable angle between the imaginary line connecting two outer rollers and the horizontal defines an angle A2, wherein A1 is substantially equal to A2.

According to some embodiments, the plurality of linearly aligned rotatable rollers in each series of linearly aligned rotatable rollers may be free rotating around the axis of rotation.

According to some embodiments, at least one of the plurality of linearly aligned rotatable rollers in each series of linearly aligned rotatable v may be driven to rotate around the axis of rotation.

Most preferably this at least one driven rollers is the roller closest to the boundary.

It is clear that aspects of the first facet of the first aspect of the present invention may be combined with aspects of the second facet of the first aspect of the present invention and vice versa.

According to a second aspect of the invention, an automated shuttle storage system is provided, the automated shuttle storage system comprising at least one handling station, such as an outbound station according to the first aspect of the invention.

The automated shuttle storage system may be an automated shuttle racking system.

The automated shuttle storage system may comprise a racking system, which itself comprises vertical beams. On one, or more than one horizontal level, horizontal beams are provided which provide a horizontal track adapted to support one or more shuttles, being loaded with a payload. Hence the horizontal tracks provide pathways through the automated shuttle storage system at one or at more than one vertical level. These or other horizontal beams provide storage places, accessible for shuttle being loaded with payload, and adapted to receive the payload from the shuttle, thereby temporarily storing the payload in the automated shuttle storage system.

The handling station, optionally an outbound station, may be accessible by shuttles by providing a branch at one of the horizontal tracks.

According to a third aspect of the present invention, a handling station, such as an outbound station, according to the first aspect of the invention is used to remove goods from an automated shuttle storage system.

According to a fourth aspect of the present invention, a method for unloading goods from an automated shuttle storage system is provided, the method comprises:
- providing an automated shuttle storage system comprising at least one outbound station according to the first aspect of the invention and at least one shuttle having support surface for supporting goods;
- take in a goods-loaded shuttle from the automated shuttle storage system into the void shuttle parking space;
- transfer the goods from the shuttle onto the two gravity roller tracks by modifying the relative height of the gravity roller tracks and the support surfaces of the shuttle; and
- transfer the goods towards the gravity roller zone by having the back ends of the gravity roller tracks positioned at a higher position in view to the horizontal, as compared to the front ends of the gravity roller tracks.

According to some embodiments, the back ends of the gravity roller tracks may be unalterable positioned at a higher position in view to the horizontal, as compared to the front ends of the gravity roller tracks, modifying the relative height of the gravity roller tracks and the support surfaces of the shuttle is provided by decreasing the height of the support surface of the shuttle.

In the context of this invention, when reference is made to object which are substantially horizontal, vertical or figures being substantially equal, this means that the object is, or figures are horizontal, vertical or identical within tolerances used in the technical field of racking systems.

It is also clear that features described for one aspect of the present invention, may be combined and integrated in methods or devices of one or more other aspects of the invention.

When reference is made to ranges, and unless explicitly stated differently, the ranges are to be understood inclusive its end points.

### Brief Description of the Drawings

Fig. 1, 2, 3 and 4 illustrate schematically a handing station, in this embodiment an outbound station according to the invention.
Fig. 5, 6 and fig. 7 and 8 illustrate schematically a transfer zone of the automated shuttle racking system of figures 1 to 4.
Fig. 9, 10 and 11 show another handing station according to the invention.
Fig. 12 shows a detail of the handling station in figures 9 to 11.
Fig. 13 shows an embodiment of a roller part of the handling station in figures 9 to 12.
Fig. 14 shows the setup of the roller parts being part of the handling station in figures 9 to 12.

In the different figures, the same references refer to the same or a similar feature.

### Detailed Description of Embodiment(s)

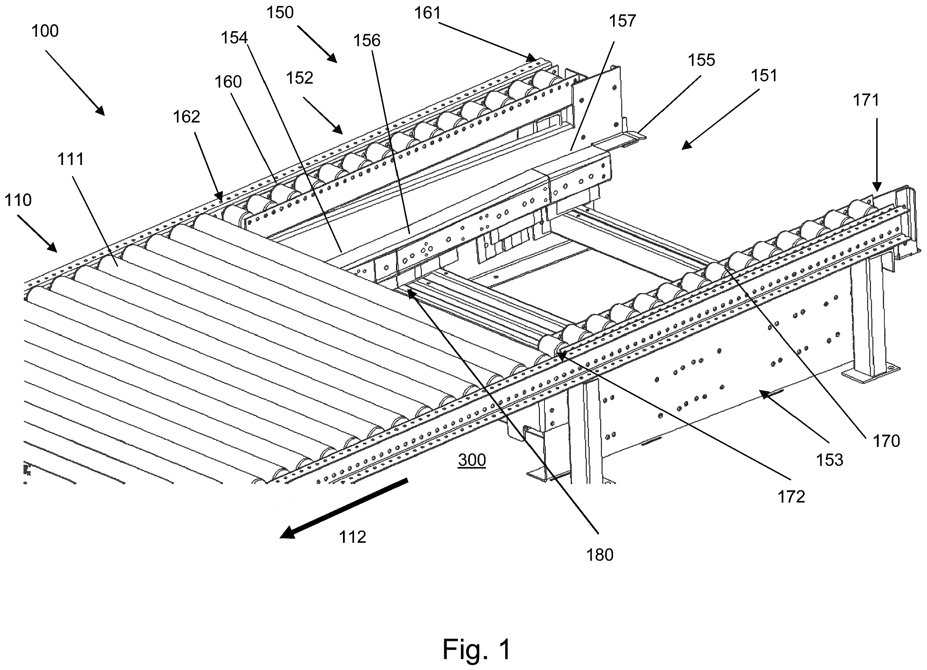

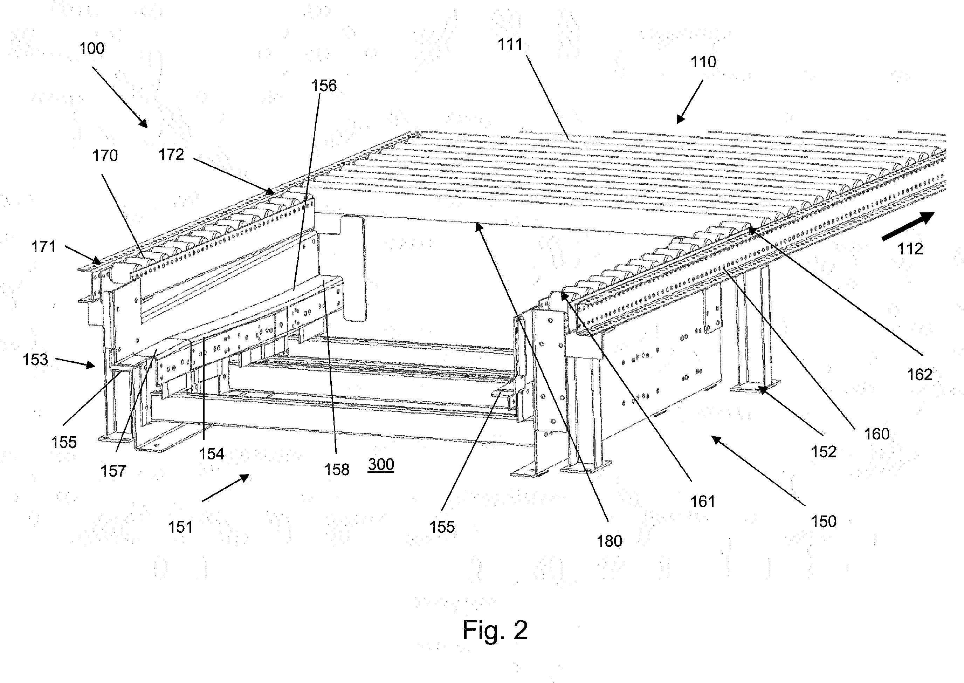

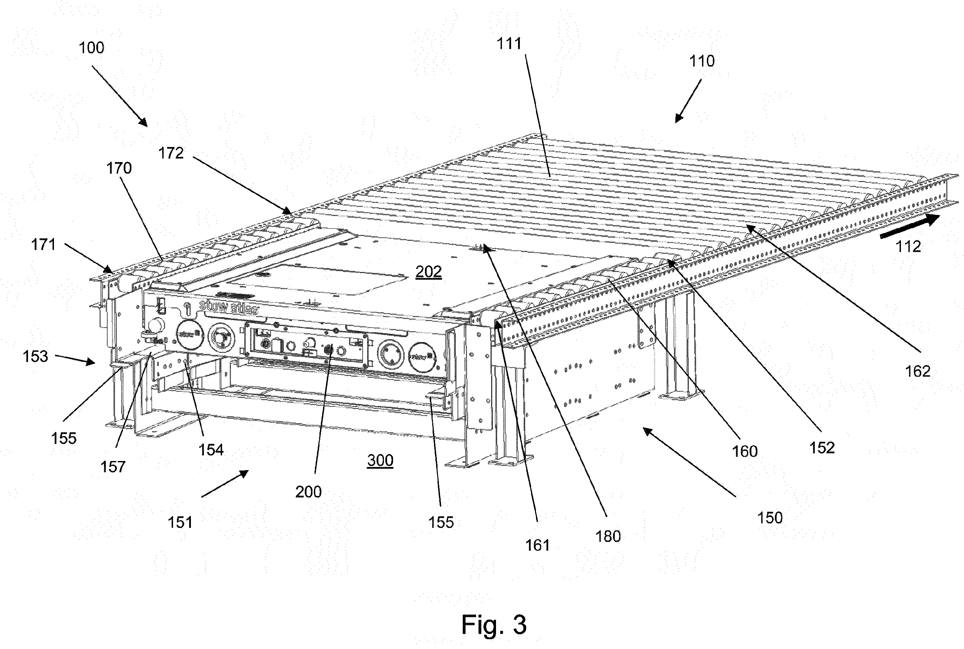

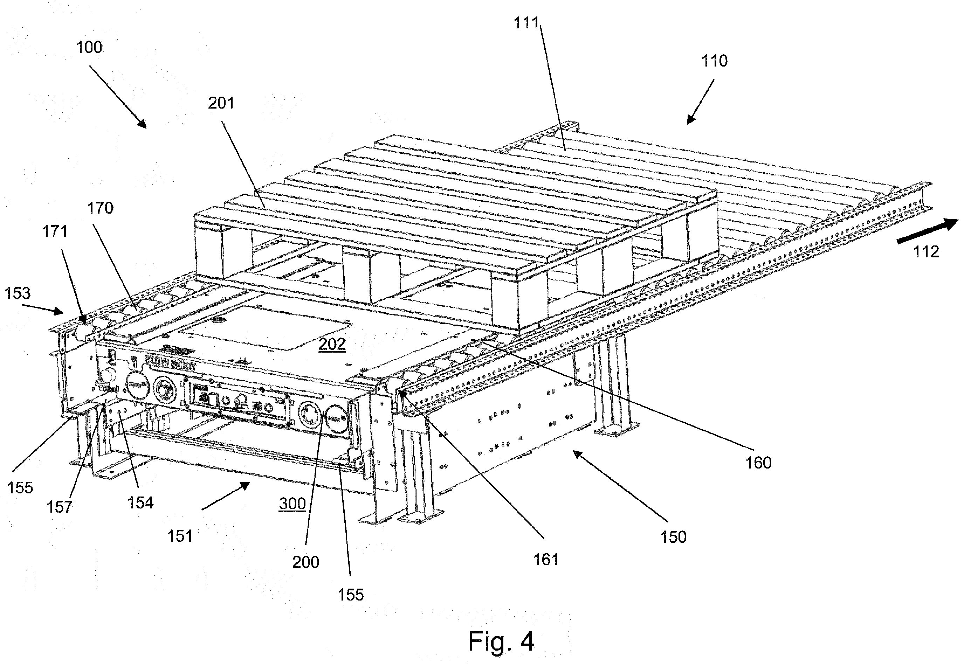

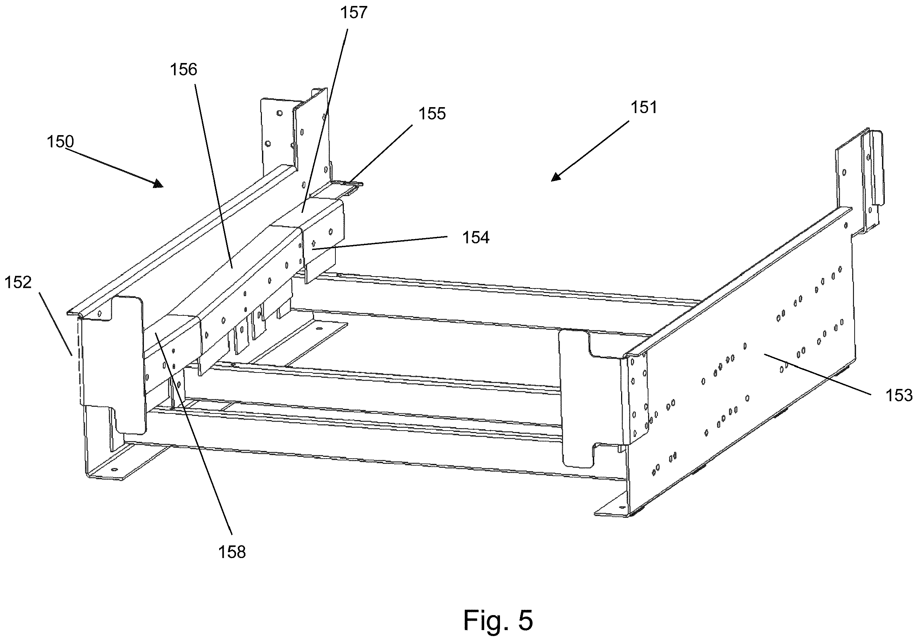

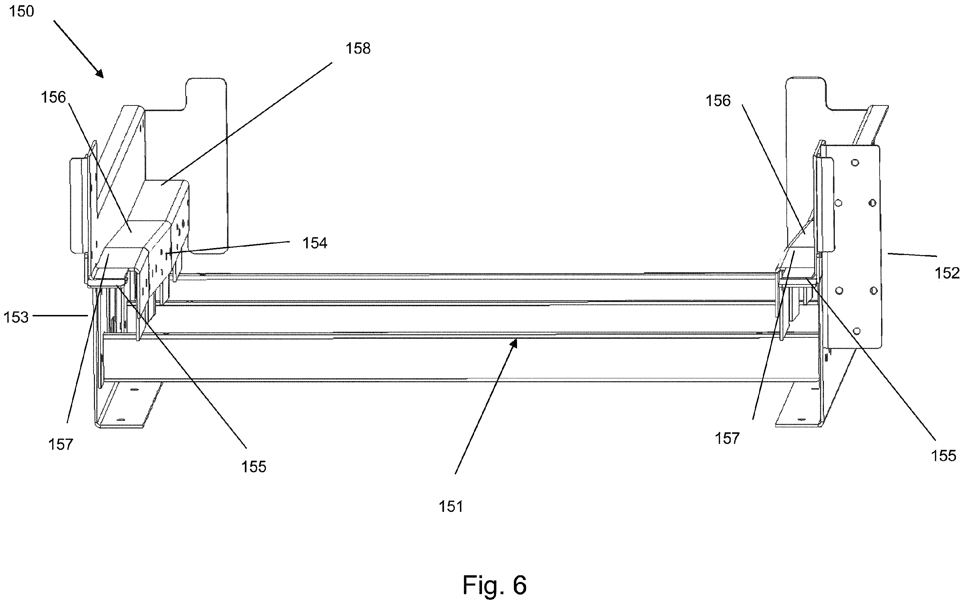

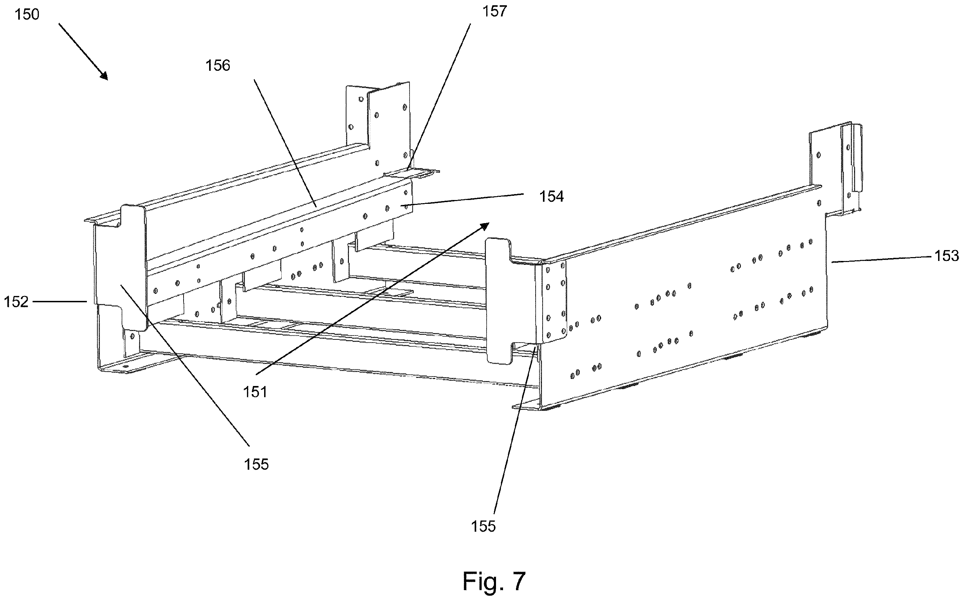

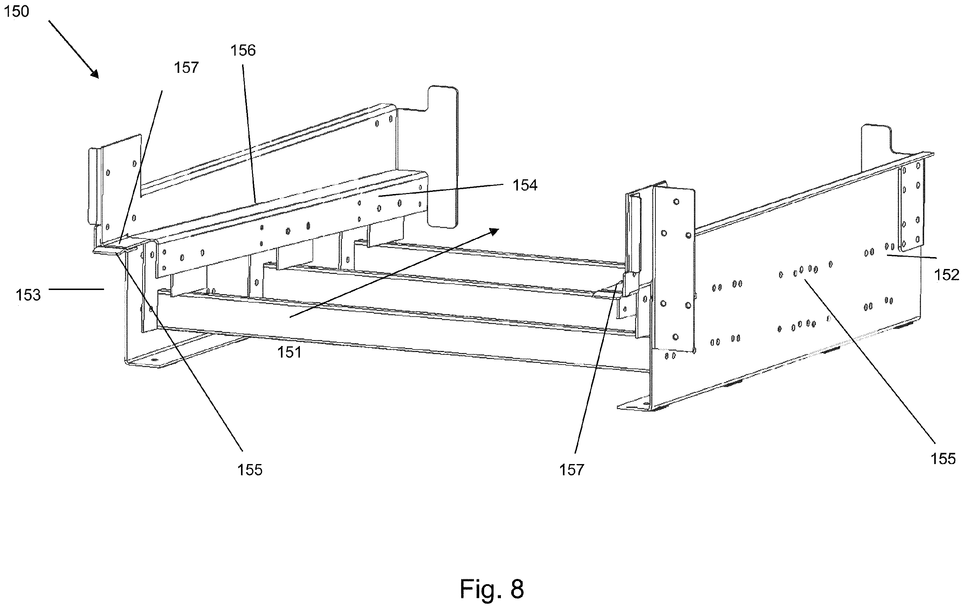

A handing station, in this embodiment an outbound station 100 of an automated shuttle racking system, is shown in figures 1, 2, 3 and 4. Figure 1, 3 and 4 show the outbound station 100, figure 1 where no shuttle is present in the outbound statin 100, figure 3 where a shuttle 200 is present in the transfer zone 150 of the outbound station 100, figure 4 where a load 201 is dropped off at this outbound station 100 by the shuttle 200. The difference between the figures 1 and 2 is the embodiment of the outbound station 100. In figure 1, as will be explained further, the outbound station 100 has a transfer zone 150, which comprises a shuttle receiving support 154 composed of two profiled rails 155, one at each of the two lateral sides 152 and 153 of the transfer zone 150, where these two rails 155 have a longitudinal profile comprising a horizontally oriented section 157 at its back end providing part of the support surface 156. More details of this transfer zone are shown in figures 5 and 6. In figure 2, as will be explained further, the outbound station 100 has a transfer zone 150, which comprises a shuttle receiving support 154 composed of two profiled rails 155, one at each of the two lateral sides 152 and 153 of the transfer zone 150, where these two rails 155 have a longitudinal profile comprising a first horizontally oriented section 157 at its back end providing part of the support surface 156, and a second horizontally oriented section 158 at its front end providing part of the support surface 156. More details of this transfer zone are shown in figures 7 and 8.

The automated shuttle racking system comprises a racking system and one or more shuttles 200 moving in this racking system. The outbound station 100 comprises a gravity roller zone 110 comprising a gravity roller conveyor 111 for receiving goods 201 from an automated shuttle racking system via a shuttle 200 being received or taken in in the transfer zone 150, and having transferred its load to the gravity roller tracks 160 and 170 along the lateral sides of the transfer zone 150.

The gravity roller conveyor 111 has a goods moving sense 112 as shown in the figures. For this, the height in view of the horizontal 300 of the rollers at or near the boundary of the gravity roller zone 110 with the transfer zone 150, is larger as completed to the rollers at the front of the gravity roller conveyor 111. The gravity roller conveyor 111 is slightly sloped towards the front side of the gravity roller conveyor 111, which cause goods positioned on the rollers to move towards the front end of the gravity roller conveyor 111.

The transfer zone 150 is positioned upstream this gravity roller zone 110 in view of the goods moving sense 112. So the transfer zone 150 is adjacent to this gravity roller zone 110 along a boundary 180. The transfer zone 150 comprises a void shuttle parking space 151 adapted to take in a shuttle from an automated shuttle racking system.

The transfer zone further comprises two gravity roller tracks 160 and 170, which are substantially perpendicular to the boundary 180. Each of the gravity roller tracks 160 and 170 is positioned along a longitudinal side 152 and 153 of the void shuttle parking space 151. At the back ends 161 and 171, the gravity roller tracks 160 and 170 are positioned higher as compared to their opposite front ends 162 and 172, being adjacent the boundary 180. Goods positioned on the gravity roller tracks 160 and 170 will move towards the boundary 180, and hence further to and along the gravity roller zone 110.

So by having the back ends 161 and 171 of the gravity roller tracks 160 and 170 being positioned at a higher position in view to the horizontal 300, as compared to the front ends 162 and 172 of the gravity roller tracks 160 and 170, the gravity roller tracks 160 and 170 are adapted to transfer goods 201 from a shuttle 200 towards the gravity roller zone 110.

The gravity roller conveyor 111, in this embodiment a gravity roller conveyor 111 having a width selected in the range of about 700 to 1600 mm and a length selected in the range of about 900 to 1600 mm (i.e. the distance between the first and last roller of the gravity roller conveyor 111), and is sloped to the vertical by an angle of about 4%. Each of the gravity roller tracks 160 and 170 have a width selected in the range of about 5 to 100 cm and a length selected in the range of about 900 to 2500 mm (i.e. the distance between the first and last roller of the gravity roller track 160 or 170), and is sloped to the vertical by an angle of about 4%.

As best visible in the details of the transfer zone 150 in figures 5 to 8, the transfer zone 150 has at both its longitudinal sides 152 and 153, a profile, in this embodiment an L-profiled metal rail 155. The horizontal flank of the L provide supporting surfaces 156 to receive and support the wheels of a shuttle 200.

The shuttle when being taken in in the void shuttle parking space 151, moves on these support surfaces 156. Part of these support surfaces 156 are sloped to the surface, such the shuttle driving into the void shuttle parking space 151, obtains a front side being downwards sloped to the horizontal. As such the support surface 202 of the shuttle, carrying a goods 201, becomes sloped to the horizontal as well.

By providing two rails 155 having a longitudinal profile comprising a first horizontally oriented section 157 at its back end providing part of the support surface 156 (figures 5 to 8), and optionally a second horizontally oriented section 158 at its front end providing part of the support surface 156 (figures 7 and 8), the shuttle may have one or more wheels at each longitudinal side of the shuttle 200, which are positioned on these horizontal surfaces when being taken in. this may improve the stability of the shuttle, in particularly may reduce the tendency to move fore- or backwards during unloading of the goods 201.

Between the front end of the rail and the horizontal oriented section 157, or between the horizontal oriented sections 158 and 157, the support surface 156 may be flat, straight but sloped to the horizontal. The angle of slope may be chosen between 2% and 6%. Preferably the angle is chosen such that the slope of the support surface of the shuttle, when positioned in the void shuttle parking space 151 is about 4%, hence about equal to the slope of the gravity roller tracks 160 and 170, and also preferably substantially identical to the slope of the gravity roller conveyor 111.

When using this outbound station 100 in an automated shuttle storage system, like an automated shuttle warehouse system, an empty outbound station 100 awaits a shuttle on which a load or good is present. The shuttle 200, carrying the load or good on its lifted support surface 202, drives into the void shuttle parking space 151 via the back ends of the two rails 155, the wheels of the shuttle being supported on the support surfaces 156. The shuttle, when driving in, becomes sloped while the goods, e.g. a pallet, has a part of its lower surface extending above the gravity roller tracks 160 and 170. The shuttle 200 continues until it is taken in the void shuttle parking space 151. The shuttle stops without contacting the boundary 180. Possibly (not shown in the figures) a stopping means prevents the shuttle from hitting the boundary 180. The goods now are supported on the support surface of the shuttle and are extending above the gravity roller tracks 160 and 170. The shuttle lowers its support surface 202, and at certain height, the good contacts the rollers of the gravity roller tracks 160 and 170. The goods become supported by the gravity roller tracks 160 and 170 only, and due to their weight, and the slope of the gravity roller tracks 160 and 170, the good forwards towards the boundary, onto the gravity roller zone and further, until the end of the gravity roller zone is reached. Possibly the goods are stopped by a stopping means near or at the end of the gravity roller zone. The shuttle, being empty, may leave the void shuttle parking space 151 in the opposite way, and may again collect goods or take up its function in the automated shuttle warehouse system. The shuttle may leave the transfer zone once the goods, e.g. the pallet, has been transferred on the gravity roller tracks, and does not have to await the removal of the transferred goods from the gravity roller tracks. In case goods, like a pallet, are still present in the gravity roller zone, the second transferred goods, like a further pallet, may move from the gravity roller tracks up to the stopping means, where the motion of this second goods are hold, until the first goods are removed from the gravity roller zone.

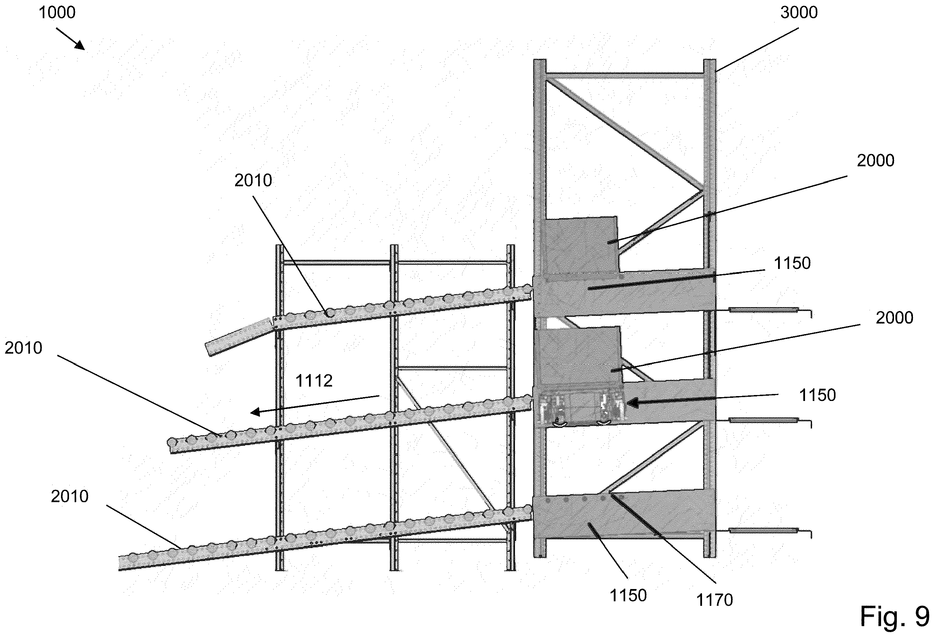

Another handing station 1000 of an automated shuttle racking system, is shown in figures 9, 10a, 10b, 10c and 11. Figure 9 shows a sideview of the automated shuttle racking system. The automated shuttle racking system comprises a racking system 3000 and one or more shuttles 2000 moving in this racking system. The handing station 1000 comprises at least one receiving zone 2010 for receiving goods, in this embodiment totes 2001, from the automated shuttle storage system, and having a goods moving sense 1112. In this embodiment, three receiving zones are provided one above the other. Each receiving zone 2010 is preceded by a transfer zone 1150 positioned upstream said receiving zone in view of said goods moving sense. Between the transfer zone 1150 and the receiving zone 2010, a boundary 1180 is present, which boundary 1180 is substantially perpendicular to the good moving sense 1112.

The transfer zone 1150 comprise two good transfer tracks 1160 and 1170, one at each longitudinal side 1152 and 1153 of the void shuttle parking space 1151. The good transfer tracks 1160 and 1170 are substantially perpendicular of the boundary 1180.

Each of the good transfer tracks 1160 and 1170 is a series of five identical and linearly aligned rotatable cylindrical roller 4001, with an axis of the roller, being also the axis of rotation, being directed inwards the void shuttle parking space 1151. The diameter of the outer end of the roller 4001 is about 19 mm, the axial length being about 27 mm; the distance axis to axis of the cylinders is about 100 mm. In an alternative embodiment, an identical setup is provided, using rollers 4001 with a diameter of about 19 mm, and an the axial length being about 52 mm.

For both series of linearly aligned rotatable cylinders 4001, the angle between the imaginary line connecting two outer rollers and the horizontal, is about 2°. The linearly aligned rotatable rollers 4001 are not driven but are free rolling.

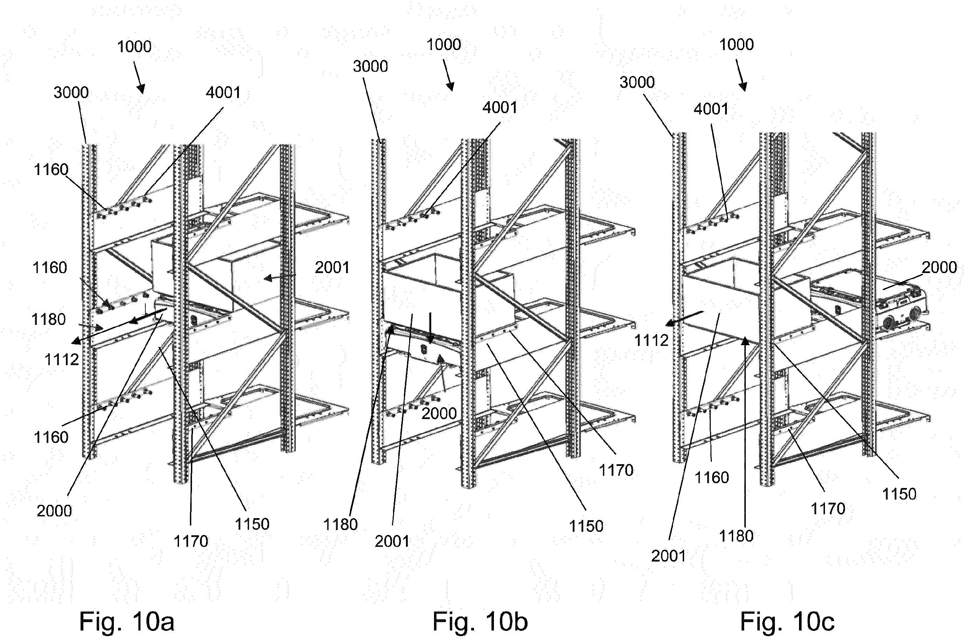

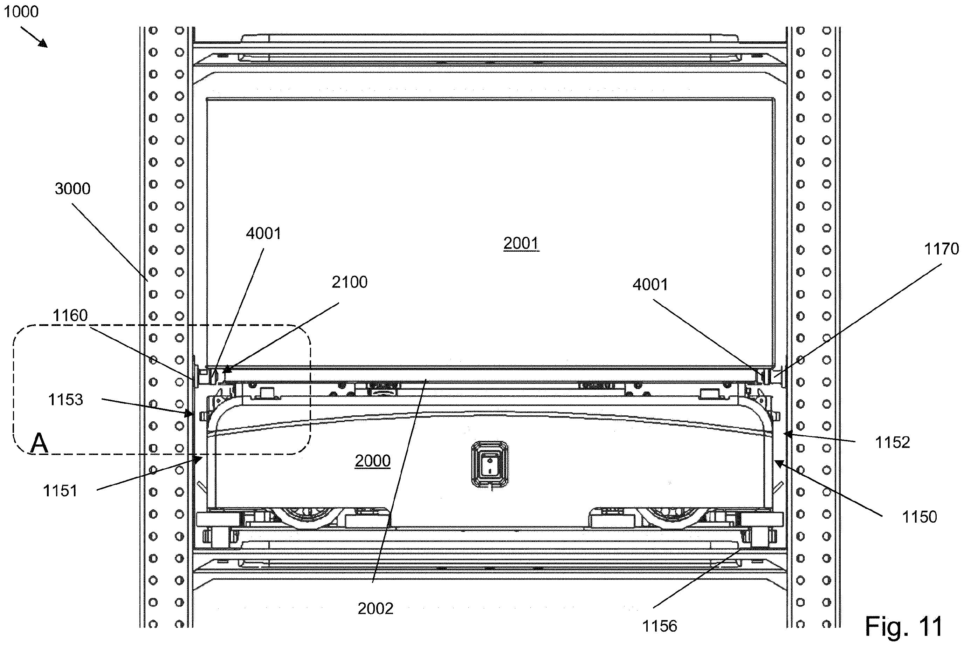

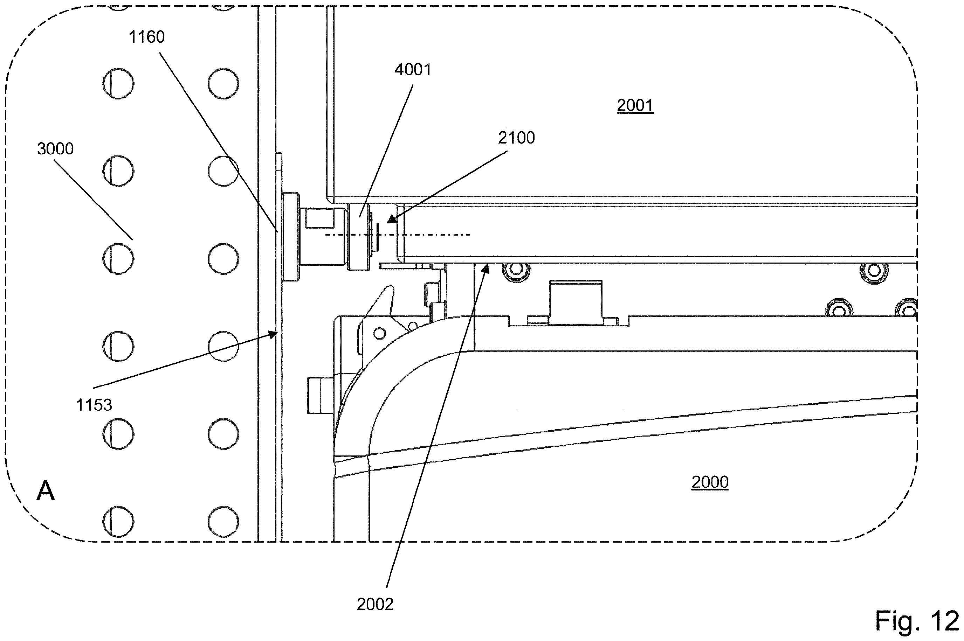

As best shown in the sequence of figures 10a, 10b, 10c and 12 (figure 12 showing a detail A of figure 11), the linearly aligned rotatable rollers 4001 are adapted to receive the totes 2001 from a shuttle 2000 positioned in the void shuttle parking space. When the shuttle 2000, carrying a tote 2001 (or optionally more than one tote) enters the void shuttle parking space, the rollers 4001 slide into a recess 2100 between the lower side of the tote 2001 and the support surface 2002. By correctly setting the height of the support surface 2002, the rollers 4001 slide into a recess 2100 without making contact with the tote 2001. Possibly the rollers 4001 may touch the lower side of the tote 2001, though this is not necessary, and can be allowed when the rollers 4001 are not driven but free rolling. The shuttle moves in the void shuttle parking space over a slightly inclined support surfaces 1156.

Once the shuttle 2000 is positioned in the void shuttle parking space, the support surface 2002 of the shuttle is lowered, and the tote becomes carried by the linearly aligned rotatable rollers 4001. Due to gravity when the linearly aligned rotatable rollers 4001 are not driven, or due to the driving force when the linearly aligned rotatable rollers 4001 are driven, the tote may now move over the boundary 1180 towards the receiving zone 2010, while the shuttle 2001 may leave the void shuttle parking space in opposite direction.

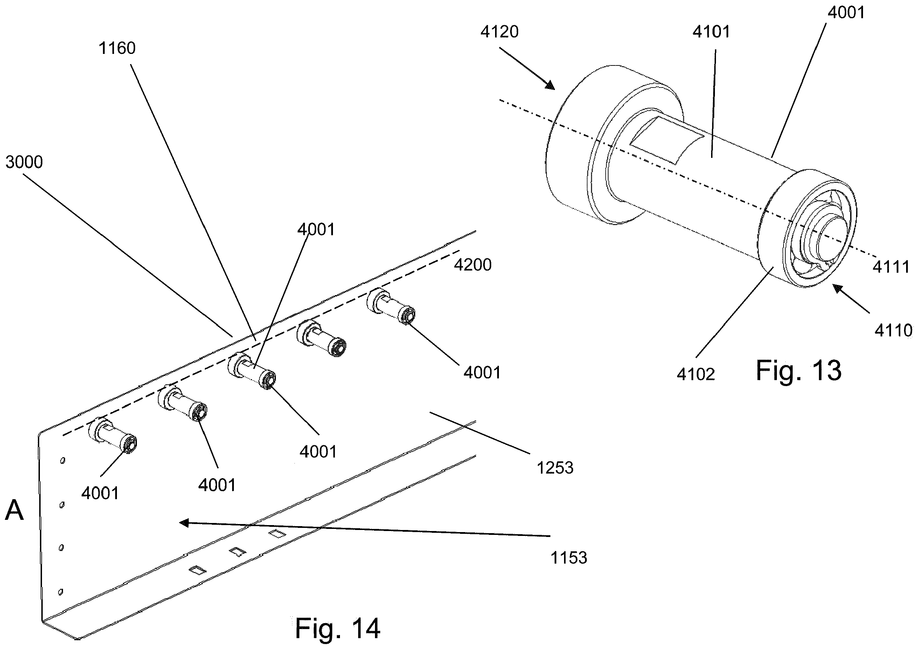

A more detailed view of the roller 4001 is shown in figure 13 and 14. The rollers 4001 comprise a non-rotating axle or shaft 4101, which at one outer end 4110 a rotatable wheel or bearing 4102. This rotatable wheel or bearing is to rotate round the axis 4111 of the axle 4101. At its other outer end 4120 the axle or shaft 4101 to the lateral side 1153 of the void parking space, e.g. to a plate 1253 defining this lateral side 1153. Five identical rollers 4101 are linearly aligned and mounted to the plate 1253 according to a line 4200.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A handling station of an automated shuttle storage system, said automated shuttle storage system comprising a racking system and one or more shuttles moving in said racking system, the handling station comprises
- a receiving zone for receiving goods from said automated shuttle storage system, and having a goods moving sense;
- a transfer zone positioned upstream said receiving zone in view of said goods moving sense, the transfer zone being adjacent to said receiving zone along a boundary, said transfer zone comprising a void shuttle parking space adapted to take in a shuttle from an automated shuttle storage system;
wherein said transfer zone comprise two good transfer tracks being non parallel to the boundary, each of said good transfer tracks being positioned along a longitudinal side of the void shuttle parking space and having a back end and an opposite front end adjacent the boundary, said good transfer tracks being adapted to receive the goods from a shuttle positioned in said void shuttle parking space and being adapted to transfer the goods towards the receiving zone by having the back ends of the good transfer tracks being positioned at a higher position in view to the horizontal, as compared to the front ends of the good transfer tracks.

2. A handling station according to claim 1, wherein said handling station is an outbound station.

3. A handling station according to claim 2, wherein said receiving zone is a gravity roller zone comprising a gravity roller conveyor for receiving goods from said automated shuttle storage system, said two good transfer tracks are two gravity roller tracks.

4. A handling station according to any one of claims 1 to 2, wherein said good transfer tracks are series of linearly aligned rotatable rollers, the axis of said rollers being substantially parallel to the axis of rotation, the axis of the rollers are directed inwards the void shuttle parking space.

5. A handling station according to claim 4, wherein for both series of linearly aligned rotatable rollers, the maximum angle between the imaginary line connecting two outer rollers and the horizontal, is more than or equal to 2%.

6. A handling station according to any one of the claims 4 to 5, wherein each of said series of linearly aligned rotatable rollers defines a plane which is under a slope with respect to the horizontal about a line parallel to the boundary, the slope between the imaginary line connecting two outer rollers and the horizontal.

7. A handling station according to any one of the claims 4 to 6, wherein for each series of linearly aligned rotatable rollers, the difference in height between the two outer rollers is unalterable.

8. A handling station according to anyone of the claims 4 to 7, wherein said transfer zone comprises a shuttle receiving support (154) adapted to carry a shuttle, this shuttle receiving support being unalterably sloped with respect to the horizontal about a line parallel to the boundary

9. A handling station according to any one of the claims 4 to 8, wherein the shuttle receiving support defines a support plane being unalterably sloped with respect to the horizontal about a line parallel to the boundary according to an angle A1, the unalterable angle between the imaginary line connecting two outer rollers and the horizontal defines an angle A2, wherein A1 is substantially equal to A2.

10. A handling station according to any one of the claims 4 to 9, wherein the plurality of linearly aligned rotatable rollers in each series of linearly aligned rotatable rollers are free rotating around the axis of rotation.

11. A handling station according to any one of the claims 4 to 9, wherein at least one of the plurality of linearly aligned rotatable rollers in each series of linearly aligned rotatable rollers is driven to rotate around the axis of rotation.

12. An automated shuttle storage system comprising at least one handling station according to any one of the claims 1 to 11.

13. A method for unloading goods, like totes, from an automated shuttle storage system, said method comprises:
- providing an automated shuttle storage system comprising at least one handling station according to any one of the claims 1 to 11 and at least one shuttle having support surface for supporting goods;
- take in a goods-loaded shuttle from the automated shuttle storage system into the void shuttle parking space;
- transfer the goods, optional being one or more totes from the shuttle onto the two good transfer tracks by modifying the relative height of the good transfer tracks and the support surfaces of the shuttle; and
- transfer the goods, optional being one or more totes towards the receiving zone by having the back ends of the good transfer tracks positioned at a higher position in view to the horizontal, as compared to the front ends of the good transfer tracks.

14. A method according to claim 13, wherein the back ends of the good transfer tracks being unalterable positioned at a higher position in view to the horizontal, as compared to the front ends of the good transfer tracks, modifying the relative height of the good transfer tracks and the support surfaces of the shuttle is provided by decreasing the height of the support surface of the shuttle.

15. A method according to claim 13 or 14, the method being a method for unloading totes from an automated shuttle storage system.
